# EUROPEAN PATENT APPLICATION

(11) **EP 1 643 164 A2**
(43) Date of publication of application: **05.04.2006**
(21) Application number: 05254796.5
(22) Date of filing: 29.07.2005
(51) Int. Cl.: F16H 61/12

(54) **Malfunction detector for rotation sensor**

(30) Priority: 30.09.2004 JP 2004288109
(71) Applicant: JATCO Ltd, Fuji-shi, Shizuoka 417-8585 (JP)
(72) Inventor: Hashimoto, Jun c/o Jatco Ltd., Fuji-shi, Shizuoka 417-8585 (JP); Takizawa, Satoshi c/o Jatco Ltd., Fuji-shi, Shizuoka 417-8585 (JP); Kobayashi, Atsushi c/o Jatco Ltd., Fuji-shi, Shizuoka 417-8585 (JP); Kurokawa, Shuji c/o Jatco Ltd., Fuji-shi, Shizuoka 417-8585 (JP); Maekawa, Yasukazu c/o Jatco Ltd., Fuji-shi, Shizuoka 417-8585 (JP); Akanuma, Masatoshi c/o Jatco Ltd., Fuji-shi, Shizuoka 417-8585 (JP)
(74) Representative: Baldwin, Mark

(57) **Abstract**

While a voltage value of the battery detected by a battery voltage-detecting part is less than a predetermined threshold voltage value for determining a low voltage state, a rotation sensor malfunction-detecting part stops calculating a vehicle speed and uses the vehicle speed calculated at a time immediately before a time when a voltage value of a battery becomes less than the threshold voltage value for determining the low voltage state, for detecting malfunction in a rotation sensor. Thereby, even if noises due to a voltage fluctuation in the battery mix with the rotation signal from the rotation sensor, since the rotation sensor malfunction-detecting part does not calculate the vehicle speed during a period of time when the voltage value of the battery detected by a battery voltage-detecting part is less than the threshold voltage value for determining the low voltage state, the vehicle speed is not miscalculated based on the rotation signal including noises, and the malfunction in the rotation sensor can be precisely detected.

## Description

### BACKGROUND OF THE INTENTION

### Field of the Invention

The present invention relates to a malfunction detector for a rotation sensor to detect a malfunction in a rotation sensor, which outputs a rotation signal in accordance with a rotational state of a rotator.

### Description of the Prior Art

Conventionally, a rotation sensor that detects a rotation speed of an output-rotating shaft in an automatic transmission is connected to an automatic transmission control unit (hereinafter referred to as ATCU) connected to an engine. The ATCU uses a rotation signal outputted from the rotation sensor as a vehicle speed of a vehicle equipped with the automatic transmission for various controls.

The rotation sensor is one of a type that converts a rotation of the output shaft into a voltage variation as its output.

The ATCU detects the voltage variation outputted from the rotation sensor and obtains the vehicle speed by counting how many times the voltage exceeds a predetermined value within a predetermined time (hereinafter referred to as a sampling cycle). At this time, when the calculated vehicle speed amounts to a vehicle speed variation which does not occur in a normal driving condition, it is assumed that a malfunction occurs in the rotation sensor, and a predetermined relevant measure is taken against the malfunction.

A structure of such rotation sensor, for instance, is described in Japanese Patent Laid-Open Publication No. 6-289037.

### SUMMARY OF THE INVENTION

However, when a starter motor is activated by a battery supply for engine starting, a fluctuation in battery voltage occurs.

When the battery voltage is low, the range of the fluctuation in the battery voltage at the time of the engine starting overlaps with the range of the voltage variation of the rotation sensor, so that noises due to the voltage fluctuation in the battery mix with the voltage variation of the rotation sensor that the ATCU measures.

Since the ATCU calculates a vehicle speed, based upon the voltage variation of the rotation sensor including the noises, the calculated vehicle speed amounts to the vehicle speed change which does not occur in a normal driving condition. As a result, that brings a problem that occurrence of a malfunction is determined by mistake even though the rotation sensor is normal. There also occurs a problem that proper removal of such noises with a filter leads to a higher cost.

From the foregoing problems, it is an object of the present invention to provide a malfunction detector for a rotation sensor, which accurately makes malfunction determination in a rotation sensor, even if noises due to a fluctuation in a battery voltage mix with a rotation signal outputted from the rotation sensor.

Thus the present invention provides a malfunction detector for a rotation sensor that outputs a rotation signal in accordance with a rotational state of a rotator for a vehicle comprising; a rotation sensor malfunction-detecting part that calculates a vehicle speed for each time of a predetermined sampling time, based on the rotation signal inputted from the rotation sensor and performs malfunction detection in the rotation sensor with the calculated result; and a battery voltage-detecting part that detects a voltage value of a battery provided in the vehicle, wherein, during a period of time when the voltage value of the battery detected by the battery voltage-detecting part is less than a predetermined threshold voltage value for determining a low voltage state, the rotation sensor malfunction-detecting part stops calculation of the vehicle speed, and uses, as a vehicle speed for detecting the malfunction of the rotation sensor, the vehicle speed calculated immediately before it is detected that the voltage value of the battery detected by the battery voltage-detecting part is less than the threshold voltage value for determining the low voltage state.

According to the present invention, since the rotation sensor malfunction-detecting part does not calculate a vehicle speed during a period of time when the battery voltage is less than the threshold voltage value for determining the low voltage state, an erroneous vehicle speed based upon a rotation signal including the noises is not calculated, even if a battery voltage is less than a threshold voltage value for determining the low voltage state and noises due to a voltage fluctuation in a battery mix with a rotation signal outputted from a rotation sensor.

Therefore, the rotation sensor malfunction-detecting part does not make malfunction determination in a rotation sensor based on the erroneous vehicle speed, and thus a malfunction in the rotation sensor can be precisely detected.

### BRIEF DESCRIPTION OF THE DRAWINGS

Referring now to the attached drawings which form a part of this original disclosure:
Fig. 1 is a view showing an embodiment of the present invention;
Fig. 2 is a flow diagram showing a calculation process of a vehicle speed performed by a rotation sensor malfunction-detecting part; and
Fig. 3 is a view showing a relation between a battery voltage and a vehicle speed for malfunction detection in a rotation sensor.

### DETAILED DESCRIPTION OF THE PREFERRED EMBODIMENT

An embodiment of the present invention will be described with reference to the drawings.

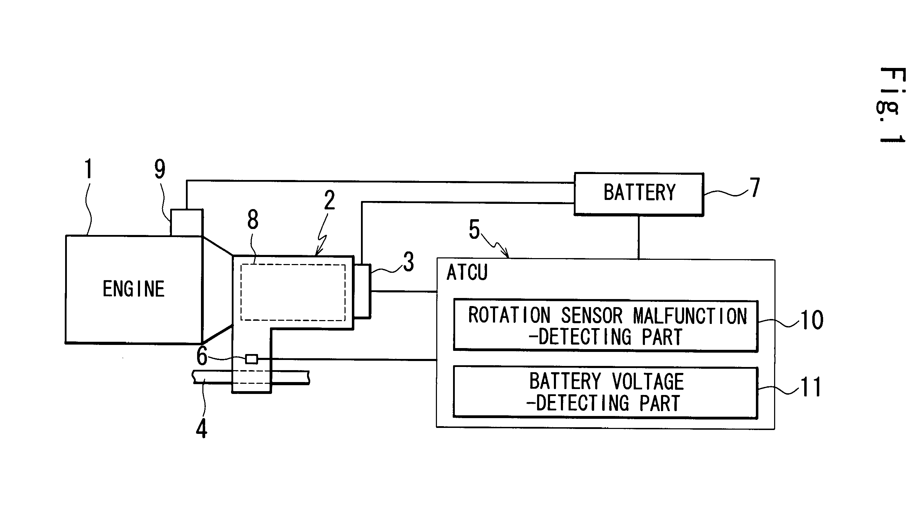

Fig. 1 is a view showing an entire structure of the embodiment of the present invention.

An engine 1, which is a source of power for a vehicle, is connected to a belt type continuously variable transmission 2 (hereinafter referred to as an automatic transmission).

The automatic transmission 2 changes a rotation speed of power inputted from the engine 1, and outputs the changed rotation speed from an output shaft 4.

The power outputted from the output shaft 4 is transmitted to driving wheels of a vehicle (not shown).

The automatic transmission 2 includes a transmission mechanism 8 that is equipped with a pair of variable pulleys and a V-belt wounded between the pulleys or the like, and a valve control unit 3 that controls a hydraulic pressure supplied to the variable pulleys in the transmission mechanism 8.

The valve control unit 3 is connected to the ATCU 5 that performs a gear shift control of the automatic transmission 2.

The ATCU 5 determines a gear ratio (radius ratio in contact part between a pair of the pulleys and the V-belt) of the automatic transmission 2 based upon a rotation speed of the engine 1, an opening of a throttle valve (not shown) in the engine 1 or the like, and outputs the determined result to the valve control unit 3.

The valve control unit 3 controls the hydraulic pressure supplied to the transmission mechanism 8 based on a signal inputted from the ATCU 5, so that the automatic transmission 2 can obtain a desired gear ratio.

A rotation sensor 6, which converts a rotation of the output shaft 4 into a voltage variation and outputs the voltage variation as a rotation signal, is attached to the output shaft 4.

The rotation signal outputted from the rotation sensor 6 is inputted into the ATCU 5.

A starter motor 9 for starting the engine 1 is attached to the engine 1.

A battery 7 for direct current power supply is connected to the engine 1, the starter motor 9, the valve control unit 3, the ATCU 5 or the like, which are operated by electric power from the battery 7.

The ATCU 5 is provided with a rotation sensor malfunction-detecting part 10 that detects a malfunction state in the rotation sensor 6, and a battery voltage-detecting part 11 that detects an output voltage value of the battery 7.

The rotation sensor malfunction-detecting part 10 observes the voltage variation in the rotation signal inputted from the rotation sensor 6, and calculates the vehicle speed by measuring how many times the voltage exceeds a predetermined voltage value within a predetermined time (hereinafter referred to as a sampling time, and the sampling time is assumed to be 100 ms in the present embodiment), and detects, based upon the calculated vehicle speed, whether or not a malfunction occurs in the rotation sensor 6.

Malfunction detection in the rotation sensor 6 to be performed by the rotation sensor malfunction-detecting part 10 is determined in such a manner that, where the calculated vehicle speed amounts to a vehicle speed change that does not occur in a normal driving condition, a malfunction in the rotation sensor 6 is occurred.

The ATCU 5 is further provided with a vehicle speed-calculating part (not shown in particular) for calculating a vehicle speed based on a rotation signal inputted from the rotation sensor 6, and performs a gear shift control of the automatic transmission 2 based on the vehicle speed calculated by the vehicle speed-calculating part.

Next, a calculating process of a vehicle speed used for malfunction detection in the rotation sensor 6, which is performed by the rotation sensor malfunction-detecting part 10, will now be explained.

In the present embodiment, it is assumed that the battery 7 is in the state of deterioration, and therefore, the voltage is remarkably decreased under a high load of the battery (during the operation of the starter motor 9, for instance).

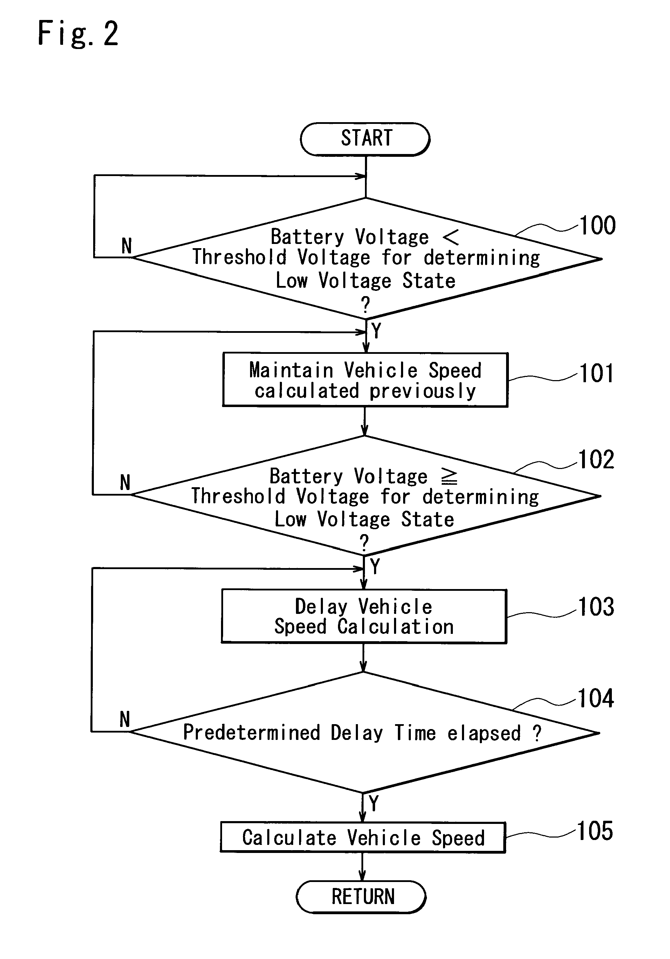

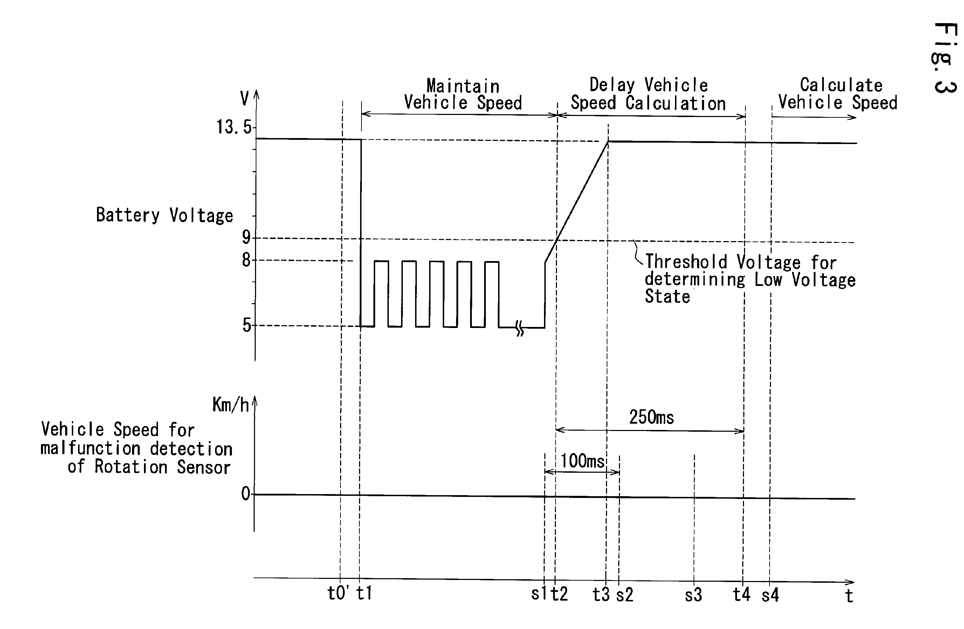

Fig. 2 shows a flow diagram of a calculating process of a vehicle speed that the rotation sensor malfunction-detecting part calculates. Fig. 3 shows a voltage value of the battery, and a vehicle speed for malfunction detection in a rotation sensor calculated by the rotation sensor malfunction-detecting part 10.

Here, a voltage value of the battery 7 before a decrease in voltage is assumed to be 13.5 V.

In a step 100, the rotation sensor malfunction-detecting part 10 determines whether or not a voltage value of the battery detected by the battery voltage-detecting part 11 becomes less than a threshold voltage value for determining the low voltage state (9 V in the present embodiment), due to actuation of the starter motor 9.

The step 100 will be repeated in a case the detected voltage value does not become less than the threshold voltage value for determining the low voltage state, and the process proceeds to a step 101 in a case the detected voltage value becomes less than the threshold voltage value for determining the low voltage state.

When the voltage value of the battery becomes less than the threshold voltage value for determining the low voltage state (time t1 in Fig. 3), then in the step 101 the rotation sensor malfunction-detecting part 10 maintains a vehicle speed calculated based on a rotation signal inputted previously from the rotation sensor 6 as a vehicle speed for malfunction detection in the rotation sensor.

Hereby, the rotation sensor malfunction-detecting part 10, maintains the vehicle speed (0 km / h) calculated at a time t0 ' immediately before the time t1 when the voltage value of the battery becomes less than the threshold voltage value for determining the low voltage state, even after the time t1, as shown in the vehicle speed for malfunction detection in the rotation sensor.

The time t0'is the time immediately before the time t1, both of which are times at a predetermined sampling cycle when the rotation sensor malfunction-detecting part 10 calculates vehicle speeds.

By the actuation of the starter motor 9, an output voltage value of the battery 7 fluctuates between 5V and 8V at a certain cycle after time t1, as shown in Fig. 3.

Since this fluctuation in the voltage value of the battery mixes with a rotation signal outputted from the rotation sensor 6 as noises, if the rotation sensor malfunction-detecting part 10 calculates a vehicle speed based on the rotation signal including the noises, the vehicle speed is miscalculated.

In a step 102 in Fig. 2, it is determined whether or not the voltage value of the battery goes beyond the threshold voltage value for determining the low voltage state.

A process proceeds to a step 103 when the voltage value of the battery is more than the threshold voltage value for determining the low voltage state, and the process returns back to the step 101 when the voltage value of the battery is less than the threshold voltage value for determining the low voltage state , wherein the vehicle speed continues to be maintained.

When the actuation of the starter motor 9 is stopped, and the voltage value of the battery goes beyond the threshold voltage value for determining the low voltage state (time t2), then in the step 103 the rotation sensor malfunction-detecting part 10 delays the beginning of the calculation of the vehicle speed by a predetermined delay time in order to precisely calculate a vehicle speed.

This predetermined time will hereinafter be described in detail.

In a step 104, it is determined whether or not a predetermined delay time elapses. The process proceeds to a step 105 when the predetermined delay time has elapsed, and the process returns back to the step 103 when the predetermined delay time has not elapsed.

In the step 105, the rotation sensor malfunction-detecting part 10 calculates a vehicle speed for performing the malfunction-detecting processing, based on a rotation signal inputted from the rotation sensor 6.

This vehicle speed is the one that is calculated based on the rotation signal, which is not affected by noises due to the fluctuation in the voltage value of the battery, and therefore the malfunction-detecting processing in the rotation sensor 6 can be accurately performed by the rotation sensor malfunction-detecting part 10, based upon such vehicle speed.

After the processing in the step 105, the process returns back to the step 100, and the above-described processing will be repeated.

Next, delay of the beginning of the calculation for the vehicle speed will be explained with reference to Fig. 3.

Here, each of time s1 to s4 in Fig. 3 respectively indicates a sampling cycle of 100 ms interval.

It is assumed that at time t2 the voltage value of the battery exceeded the threshold voltage value for determining the low voltage state, and at time t3 the voltage value of the battery returned to the previous voltage value before the decrease in voltage.

When the rotation sensor malfunction-detecting part 10 begins to calculate a vehicle speed for malfunction detection in the rotation sensor 6 at time t2, since the vehicle speed is calculated for each time of the sampling cycle (100 ms), the vehicle speed is calculated at time s2 immediate after time t2.

The vehicle speed calculated at time s2 amounts to the voltage variation in the rotation signal between time s1 and time s2, and becomes the vehicle speed calculated based upon the rotation signal including the noises (including the fluctuations until the time when the voltage value of the battery returns to 13.5 V, which is a voltage value of the battery at a normal time).

Therefore, in order to prevent this problem, the rotation sensor malfunction-detecting part 10 begins to perform the calculating processing for the vehicle speed after the time amounting to twice or more times as long as the sampling cycle has elapsed since time t2 when the voltage value of the battery goes beyond the threshold voltage value value for determining the low voltage state.

In the present embodiment, the vehicle speed is calculated after 200 ms corresponding to 2 sampling cycles plus 50 ms corresponding to an allowance time for each process elapsed.

Thereby, the rotation sensor malfunction-detecting part 10 begins calculation of the vehicle speed after time t4, which is 250 ms later from the time t2.

Accordingly, the rotation sensor malfunction-detecting part 10 calculates the vehicle speed at time s4 immediate after the time t4.

The vehicle speed calculated at the time s4 is the one that is calculated based on the rotation signal in between the times s3 and s4. In other words, that is the vehicle speed calculated precisely based on the rotation signal without noises due to the voltage fluctuation in the battery 7.

Consequently, malfunction-detecting determination in the rotation sensor 6 made by the rotation sensor malfunction-detecting part 10 is not affected by noises due to the voltage fluctuation in the battery 7.

The present embodiment is arranged as shown above. During a period of time when the voltage value of the battery detected by the battery voltage-detecting part 11 is less than the threshold voltage value for determining the low voltage state (from time t1 to t2 in Fig. 3), the rotation sensor malfunction-detecting part 10 stops performing the calculation of the vehicle speed, and uses the vehicle speed calculated at the time to' immediately before the time when the voltage value of the battery becomes less than the threshold voltage value for determining the low voltage state, as the vehicle speed for malfunction detection in the rotation sensor.

Thus, even if noises due to the voltage fluctuation in the battery mix with the rotation signal outputted from the rotation sensor 6, since the rotation sensor malfunction-detecting part 10 does not calculate the vehicle speed during the period of time when the battery voltage is less than the threshold voltage value for determining the low voltage state, the vehicle speed is not miscalculated based on the rotation signal including the noises, and as a result the malfunction in the rotation sensor can be precisely detected.

Moreover, the rotation sensor malfunction-detecting part 10 calculates the vehicle speed based on the rotation signal outputted from the rotation sensor 6 after the predetermined delay time has elapsed since the time when the voltage value of the battery goes beyond the threshold voltage value for determining the low voltage state, and thereby, the vehicle speed can be calculated based on the rotation signal without the noises.

Furthermore, by setting the time corresponding to twice or more times as long as the sampling cycle (250 ms in the present embodiment) for calculating the vehicle speed, as the predetermined delay time, the vehicle speed can be more precisely calculated based on the rotation signal which is free from noises.

Also, by applying the present invention to the rotation sensor 6 of an automatic transmission, such a problem that an erroneous determination that a malfunction occurs in the rotation sensor 6 is made even if the rotation sensor 6 is normal, is prevented. The erroneous determination may causes, for example, a control for fixing a gear ratio of the transmission, which control is performed at the time the rotation sensor is in malfunction, and as a result, a driving performance of the vehicle is deteriorated.

Even if the starter motor 9 is activated when the battery 7 is in the state of deterioration and the battery voltage is decreased rapidly, whereby the noises are mixed with the rotation signal outputted from the rotation sensor 6, the malfunction determination in the rotation sensor 6 is not erroneously performed.

Although the present invention has been fully described in connection with the embodiment applied to a belt type continuously variable transmission, the present invention is not limited to the described embodiment and it is obvious that the present invention can be also applied to a stepped gear ratio transmission, a toroidal continuously variable transmission or the like.

## Claims

1. A malfunction detector for a rotation sensor, comprising:
a rotation sensor(6) that outputs a rotation signal in accordance with a rotational state of a rotator(4) in a vehicle;
a rotation sensor malfunction-detecting part(10) that calculates a vehicle speed for each time of a predetermined sampling time, based on the rotation signal inputted from the rotation sensor(6), and performs malfunction detection in the rotation sensor with the calculated result; and
a battery voltage-detecting part(11) that detects a voltage value of a battery(7) provided in the vehicle,
wherein:
during a period of time when the voltage value of the battery(7) detected by the battery voltage-detecting part(11) is less than a predetermined threshold voltage value for determining a low voltage state, the rotation sensor malfunction-detecting part(10) stops calculation of the vehicle speed, and uses, as a vehicle speed for detecting the malfunction of the rotation sensor(6), the vehicle speed calculated immediately before it is detected that the voltage value of the battery(7) detected by the battery voltage-detecting part(11) is less than the threshold voltage value for determining the low voltage state.

2. The malfunction detector for a rotation sensor according to claim 1, wherein:
the rotation sensor malfunction-detecting part(10) calculates the vehicle speed based on the rotation signal inputted from the rotation sensor (6) after a predetermined delay time has elapsed since the voltage value of the battery(7) detected by the battery voltage-detecting part(11) goes beyond the threshold voltage value for determining a low voltage state, and uses the vehicle speed calculated immediately before it is detected that the voltage value of the battery(7) is less than the threshold voltage value for determining a low voltage state as the vehicle speed for detecting the malfunction of the rotation sensor(6) until the said delay time elapses.

3. The malfunction detector for a rotation sensor according to claim 2, wherein:
said delay time corresponds to the time equal to twice or more times as long as the sampling cycle.

4. The malfunction detector for a rotation sensor according to any one of claims 1 to 3, wherein:
said rotator includes an output shaft(4) of an automatic transmission(2) of the vehicle.

5. Apparatus for detecting malfunction of a rotation sensor of a vehicle, said apparatus comprising means for determining the voltage output of a battery of a said vehicle, means for determining a rotational speed value at predetermined intervals based on signals from a said rotation sensor and means for determining malfunction of said rotation sensor based on said determined rotational speed values, said malfunction determining means being arranged to determine malfunction of said rotational sensor based on a stored rotational speed value, when said voltage output is below a predetermined value.

6. Control apparatus for controlling the automatic transmission of a vehicle comprising apparatus as claimed in claim 5.

7. A method of detecting malfunction of a rotation sensor of a vehicle, said method comprising detecting the voltage output of the vehicle battery and determining whether said rotation sensor is malfunctioning based on rotational speed values based on signals from said rotation sensor when said voltage output is not below a predetermined value and based on a stored rotational speed value when said voltage output is below said predetermined value.

8. A computer program product comprising one or more computer program software portions which , when executed in an execution environment, is/are operable to implement one or more of the steps of claim 6.

9. A data storage medium having at least one said computer software portion of claim 7 stored thereon.

10. A microcomputer provided with said data storage medium.
